# EUROPÄISCHE PATENTSCHRIFT

(11) **EP 2 910 361 B1**
(45) Veröffentlichungstag und Bekanntmachung des Hinweises auf die Patenterteilung: **03.05.2017**
(21) Anmeldenummer: 14401030.3
(22) Anmeldetag: 25.02.2014
(51) Int. Cl.: B29C 65/20, B29L 7/00

(54) **Heizkeilschweißgerät**
Hot wedge welding apparatus
Soudeuse par coin chauffant

(43) Veröffentlichungstag der Anmeldung: 26.08.2015
(73) Patentinhaber: Leister Technologies AG, 6056 Kägiswil (CH)
(72) Erfinder: Gisler, Lukas, 6055 Alpnach-Dorf (CH); von Wyl, Bruno, 6056 Kägiswil (CH)
(74) Vertreter: Klocke, Peter

(56) Entgegenhaltungen:
- DE-A1- 2 700 971
- DE-U1- 29 719 434

## Beschreibung

Die Erfindung betrifft ein Heizkeilschweißgerät zum überlappenden Verschweißen von Kunststoffbahnen, mit einem Heizkeil der zwei, an einer Heizkeilhinterflanke beginnende und an einer Heizkeilvorderkante aufeinanderstoßende Heizkeilflachseiten aufweist und an einem von Fahrrollen getragenen Fahrgestell mit der Heizkeilvorderkante entgegen der Bewegungsrichtung beim Schweißen ausgerichtet befestigt ist, wobei der Heizkeil in einem Schweißabschnitt eines Überlappungsbereiches zwischen den Kunststoffbahnen relativ zu diesen bewegbar ist, um den Schweißabschnitt zu plastifizieren, mit einer Andrückvorrichtung für die Kunststoffbahnen an den Heizkeil, die zwei Andrückeinheiten umfasst, von denen je eine einer der Heizkeilflachseiten zugeordnet ist, und mit zwei einander gegenüberliegend angeordneten Andrückrollen, zwischen denen ein plastifizierter Schweißabschnitt beim Schweißen hindurchläuft.

Gattungsgemäße Heizkeilschweißgeräte mit beheizbaren Heizkeilen sind in vielfältigen Ausführungsformen bekannt und werden häufig insbesondere zum automatischen randseitigen Schweißverbinden von Kunststoffbahnen eingesetzt. Beim Überlappungsschweißen von Kunststoffbahnen mittels des Heizkeils werden die Kunststoffbahnen an ihren Kontaktflächen plastifiziert und anschließend unter Druckeinwirkung verschweißt. Üblicherweise ist eine untere der beiden drehbar gelagerten Andrückrollen direkt mit dem Fahrgestell verbunden und die andere obere Andrückrolle über einen Spannarm an dem Fahrgestell befestigt, der die obere Andrückrolle mit Federkraft gegen die unteren Andrückrolle presst. Beim Spannen der Kunststoffbahnen zwischen den beiden Andrückrollen wird von der oberen Andrückrolle eine hohe Spannkraft ausgeübt, die zu einer Verwindung des Fahrgestells führt, so dass sich die drehbar gelagerten Andrückrollen nicht mehr exakt parallel zu der Heizkeilvorderkante erstrecken, wobei sich die obere Andrückrolle, die an dem Spannarm üblicherweise in einem Pendelkopf gelagert ist, an die Lage der unteren Andrückrolle anpasst. Dies kann zu einem Verzug des plastifizierten Schweißabschnittes im Überlappungsbereich der Kunststoffbahnen führen, was sich negativ auf die Schweißqualität der Kunststoffbahnen auswirkt, da sich der Heizkeil nur mit zusätzlichem Kraftaufwand an den Überlappungsbereich anpassen kann. Für den Schweißvorgang ist diese zusätzliche Krafteinwirkung auf den Schweißabschnitt des Überlappungsbereiches nicht optimal. Das Dokument DE2700971 A1 beschreibt ein Heizkeilschweißgerät zum überlappenden Verschweißen von Kunststoffbahnen, mit einem Heizkeil, der schwenkbar aufgehängt und durch Federn in einer Halterung federnd gehalten wird.

Ausgehend von dem vorstehend genannten Stand der Technik liegt der Erfindung die Aufgabe zugrunde, eine Möglichkeit vorzuschlagen, bei der sich der Heizkeil ohne oder mit geringem Krafteinfluss an die jeweilige Ausrichtung der beiden Andrückrollen anpassen kann.

Diese Aufgabe wird erfindungsgemäß durch ein Heizkeilschweißgerät mit den Merkmalen des Anspruchs 1 gelöst. Weitere vorteilhafte Ausführungsformen sind den rückbezogenen Ansprüchen zu entnehmen.

Danach weist das erfindungsgemäße Heizkeilschweißgerät einen Heizkeil auf, der mittels mindestens einer Lagerbuchse, die sich zwischen den beiden Heizkeilflachseiten parallel zu der Heizkeilvorderkante und der Heizkeilhinterflanke jeweils mit Abstand erstreckt, auf einer Lagerwelle schwenkbar und damit um die Querachse des Heizkeils neigbar gelagert ist. Abhängig von der axialen Länge der mindestens einen Lagerbuchse gegenüber der Lagerwelle kann der Heizkeil eine oder mehrere Lagerbuchsen, die mit oder ohne axialen Abstand zueinander nebeneinander angeordnet sind, aufweisen. Als besonders zweckmäßig haben sich zwei flache scheibenförmige Lagerbuchsen erwiesen, die direkt an den Heizkeilseitenflanken angeordnet sind, die die Heizkeilflachseiten seitlich verbinden. Diese Art der Befestigung des Heizkeils an dem Fahrgestell ermöglicht eine konstruktiv vorbestimmte selbständige Neigungsverstellung bezüglich seiner Querachse, wobei der Heizkeil zudem über vorgesehene Einstellmittel voreinstellbar sein kann, insbesondere eine automatische Ausrichtung in der Heizkeilvorderkante. Der Heizkeil kann sich selbstständig an die jeweilige Lage der beiden Andrückrollen anpassen, indem die Lagerbuchse bezüglich der Lagerwelle eine begrenzte Rotationsbewegung in Umfangsrichtung der Lagerwelle ausführen kann. Dabei richtet sich die Heizkeilvorderkante durch die Rotationsbewegung des Heizkeils exakt nach der Höhe einer Mittelebene zwischen den beiden Andrückrollen, d. h. in vertikaler Richtung, bezüglich der beiden Andrückrollen aus.

Prinzipiell kann die Lagerbuchse, die sich parallel zu der Heizkeilvorderkante erstreckt, an einer beliebigen Position am Heizkeil angeordnet sein. Bevorzugt wird eine Ausführungsform der Erfindung, bei der die Lagerbuchse möglichst zentral am Heizkeil angeordnet ist, das heißt in etwa gleich weit von der Heizkeilvorderkante und einer sich parallel dazu mit Abstand erstreckenden Heizkeilhinterflanke entfernt. Es hat sich als günstig erwiesen, die Lagerbuchse maximal etwa 10 Prozent des Abstandes der Heizkeilvorderkante zu der Heizkeilhinterflanke gegenüber der Mitte des Heizkeils anzuordnen. Dies bewirkt, dass sich die Heizkeilhinterflanke in etwa im gleichen Maße senkt, wie sich die Heizkeilvorderkante anhebt, oder sich entsprechend anhebt, wenn sich die Heizkeilvorderkante senkt. Damit werden die Folienbahnen beim Bewegen des Heizkeils nicht oder kaum kraftbeaufschlagt und damit unerwünscht verformt. Idealerweise ist daher die Lagerung des Heizkeils über die Lagerbuchse und die Lagerwelle exakt in der Mitte zwischen der Heizkeilvorderkante und der Heizkeilhinterflanke angeordnet.

Vorzugsweise weist bei dem Heizkeil des erfindungsgemäßen Heizkeilschweißgeräts die mindestens eine Lagerbuchse gegenüber der Lagerwelle definierte axiale und/oder radiale Freiheitsgrade auf, so dass der Heizkeil um seine Längsachse verkippbar und/oder vertikal in Richtung der Andrückeinheiten verschiebbar ist. Bei der Verkippung kann die Lagerbuchse eine begrenzte Translationsbewegung und eine begrenzte radiale Kippbewegung in Querrichtung der Lagerwelle ausführen. Generell kann die Querschnittsform der Lagerbuchse und die Querschnittsform der Lagerwelle dabei an sich beliebig gewählt werden, solange diese zumindest eine Schwenkbewegung in Umgangsrichtung der Lagerwelle und eine Kippbewegung gegenüber der Längsrichtung der Lagerwelle des Heizkeils zulassen. Dabei kann die Querschnittsform der Lagerbuchse und der Lagerwelle in ihrer Kontur und ihren Abmessungen gleich oder unterschiedlich sein. Es ist auch möglich, dass die Lagerbuchse und/oder die Lagerwelle keine über ihre Länge gleichbleibende Querschnittsform aufweisen, sondern sich in der Querschnittsform über die Längsrichtung verändern, wobei sich die Lagerbuchse vorzugsweise zu ihren Enden hin aufweitet bzw. die Lagerwelle sich zu ihren Enden hin verjüngt.

Die Verkippbarkeit und/oder vertikale Verschiebbarkeit des Heizkeils wird vorzugsweise durch eine unterschiedliche Querschnittsform und/oder Länge von Lagerbuchse und Lagerwelle erreicht. Durch die neigbare, verkippbare und vertikal verschiebbare Lagerung des Heizkeils auf der Lagerwelle kann sich bei dieser speziellen Ausführungsform die Höhenlage und die Neigungslage der Heizkeilvorderkante beliebig in vorgegebenen Grenzen verändern. Somit ist, bedingt durch die voneinander abweichende Außenkontur und/oder die voneinander abweichenden Abmessungen von der Lagerbuchse und der Lagerwelle, eine einfache und kraftlose Ausrichtung des Heizkeils möglich, um das von den beiden Andrückrollen vorgegebene Höhenmaß bzw. vorgegebene Winkelmaß zu erreichen, bei denen zumindest die Heizkeilvorderkante optimal an die Lage bezüglich den beiden Andrückrollen angepasst ist.

Gemäß einer bevorzugten Ausführungsform der Erfindung ist der Heizkeil durch den axialen Freiheitsgrad der Lagerbuchse bezüglich der Lagerwelle in Querrichtung auf der Lagerwelle axial um ein bestimmtes konstruktiv vorgegebenes Maß verschiebbar gelagert. Dabei ist der Heizkeil zudem durch den radialen Freiheitsgrad der Lagerbuchse zur Lagerwelle in Querrichtung der Lagerwelle radial auf der Lagerwelle seitlich vertikal verkippbar. Bei einer Ausführungsform, bei der die beiden Heizkeilseitenflankenplan ausgeführt sind, ist die seitliche Verkippung des Heizkeils auf der Lagerwelle nur in Verbindung mit dem axialen Freiheitsgrad der Lagerbuchse bezüglich der Lagerwelle möglich.

Bei einer anderen vorteilhaften Ausführungsform ist die Verkippung des Heizkeils auf der Lagerwelle auch ohne den Freiheitsgrad der Lagerbuchse bezüglich der Lagerwelle in Längsrichtung der Lagerwelle möglich, sofern die beiden die Heizkeilflachseiten verbindenden Heizkeilseitenflanken zumindest im Bereich der Lagerbuchse nicht plan, sondern beispielsweise konvex ballig ausgebildet sind. Ansonsten ist ein Verkippen des Heizkeils auf der Lagerwelle nur möglich, wenn die Lagerbuchse kürzer ist als die Lagerwelle.

Die möglichen Kipprichtungen des Heizkeils entsprechen den möglichen Bewegungsrichtungen der unteren Andrückrolle beim Spannen des Überlappungsbereiches der Kunststoffbahnen durch die obere Andrückrolle. Die untere Andrückrolle wird durch die Spannkraft der oberen Andrückrolle vertikal beaufschlagt und in entsprechender Richtung mehr oder weniger ausgelenkt. Entsprechend kann sich der Heizkeil insbesondere in der Höhenlage und in der Neigungslage der Heizkeilvorderkante kräftefrei an die beiden Andrückrollen anpassen.

Vorzugsweise ist bei dem erfindungsgemäßen Heizkeilschweißgerät die Lagerbuchse mit einer langlochähnlichen Querschnittsform und die Lagerwelle mit einer runden Querschnittsform ausgebildet, wobei oberhalb und unterhalb der Lagerwelle zwischen der Lagerbuchse und der Lagerwelle jeweils ein Freiraum ausgebildet ist. Durch die vorhandenen Freiräume kann sich der Heizkeil auf der Lagerwelle gegenüber der horizontalen Raumrichtung um typisch circa 5 Grad verkippen sowie sich vertikal verschieben. Auch eine sinngemäß umgekehrte Ausführungsform der Lagerbuchse bzw. Lagerwelle ist möglich. In jedem Fall ist die Haupterstreckungsrichtung der langlochähnlichen Querschnittsform von Lagerbuchse bzw. Lagerwelle vertikal gegenüber einer Mittelebene zwischen den beiden Andrückrollen, die sich orthogonal zu einer Verbindungslinie der Drehpunkte der beiden Andrückrollen erstreckt. Die Haupterstreckungsrichtung ist parallel zu der Verbindungslinie der Drehpunkte der beiden Andrückrollen, so dass der horizontal angeordnete Heizkeil in Querrichtung pendelfähig gelagert ist und sich so die Heizkeilseitenflanken nach oben bzw. nach unten bezüglich den beiden Andrückrollen bewegen können. Die mögliche Winkelauslenkung des Heizkeils aus der horizontalen Lage wird durch den unterschiedlichen Durchmesser der Lagerbuchse und der Lagerwelle in vertikaler Richtung, d. h. durch die Überlänge der Querschnittsform der Lagerbuchse bestimmt.

Als Vorteil des erfindungsgemäßen Heizkeilschweißgeräts gegenüber dem bekannten Stand der Technik ist festzuhalten, dass der Heizkeil so gelagert ist, dass dieser um seine Querachse eine definierte Rotation ausführen kann und um seine Längsachse eine definierte Verkippung, sowie eine vertikale Verschiebung in Richtung der beiden Andrückeinheiten bezüglich der Mittelebene zwischen den beiden Andrückrollen vornehmen kann. Damit kann sich der Heizkeil ohne Krafteinfluss an die Verformung des Fahrgestelles und die damit verbundene Verkippung der beiden Andrückrollen gegenüber der Horizontalen anpassen. Dies wirkt sich zum einen positiv auf die Schweißqualität beim Verschweißen der Kunststoffbahnen aus und ermöglicht zudem eine höhere Schweißgeschwindigkeit bei guter Schweißqualität. Somit ist gewährleistet, dass sich die Position des Heizkeils immer an die der oberen und unteren Andrückrolle exakt anpasst.

Nachfolgend wird die Erfindung anhand eines in der Zeichnung dargestellten Ausführungsbeispiels näher erläutert. Weitere Merkmale der Erfindung ergeben sich aus der folgenden Beschreibung des Ausführungsbeispiels der Erfindung in Verbindung mit den Ansprüchen und den beigefügten Figuren. Die einzelnen Merkmale der Erfindung können für sich allein oder zu mehreren bei unterschiedlichen Ausführungsformen der Erfindung verwirklicht sein. Es zeigen:
- Figur 1: ein erfindungsgemäßes Heizkeilschweißgerät mit einem an einem Fahrgestell angeordneten Heizkeil, mit einer Andrückvorrichtung für den Heizkeil und mit zwei Andrückrollen für die Schweißnaht;
- Figur 2: die Lagerung des Heizkeils aus Figur 1 in einer Ausschnittsvergrößerung ;
- Figur 3: eine Längsschnittdarstellung der Lagerung des Heizkeils gemäß Figur 2 (Schnittlinie A - A); und
- Figur 4: eine Querschnittsdarstellung der Lagerung des Heizkeils gemäß Figur 2 (Schnittlinie B - B).

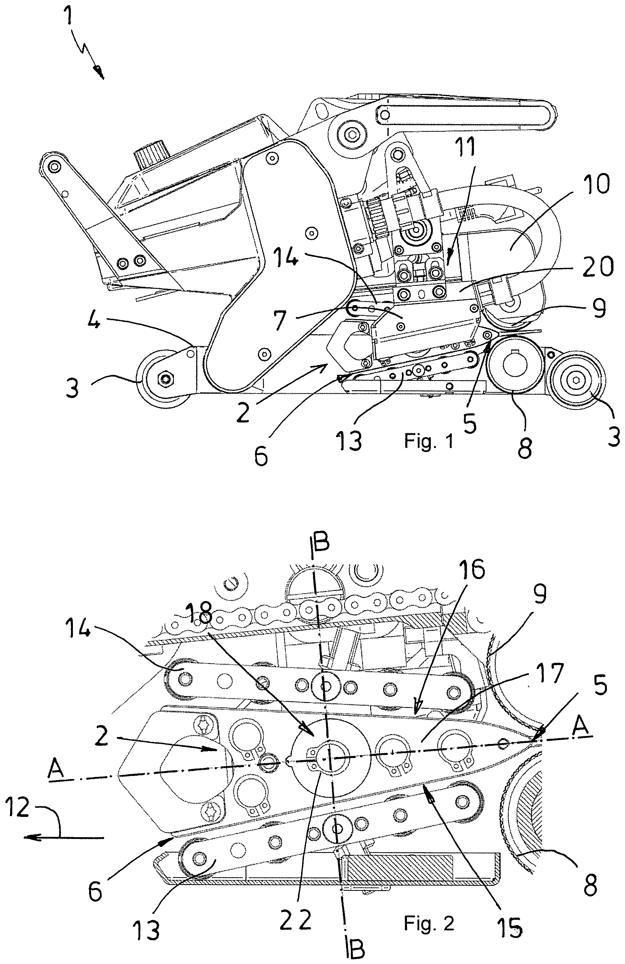

Die Figur 1 zeigt ein Ausführungsbeispiel des erfindungsgemäßen Heizkeilschweißgeräts 1 zum überlappenden Verschweißen von Kunststoffbahnen, mittels eines Heizkeils 2, der an einem von Fahrrollen 3 getragenen Fahrgestell 4 befestigt ist. Die Kunststoffbahnen sind in der Figur 1 nicht dargestellt. Der Heizkeil 2 weist eine Heizkeilvorderkante 5 und eine Heizkeilhinterflanke 6 auf und ist mit der Heizkeilvorderkante 5 entgegen der Bewegungsrichtung 12 des Heizkeilschweißgeräts 1 beim Schweißen ausgerichtet. Der Heizkeil 2, der in der Figur 1 teilweise von einer Heizkeilabdeckung 7 verdeckt ist, ist mit seiner Heizkeilvorderkante 5 nahe einer unteren Andrückrolle 8 und einer oberen Andrückrolle 9 angeordnet. Die untere Andrückrolle 8 ist fest mit dem Fahrgestell 4 verbunden. Die obere Antriebsrolle 9 ist in einem Pendelkopf 10 gelagert, der an einem Spannarm 11 angeordnet ist, welcher wiederum mit dem Fahrgestell 4 verbunden ist. Das Heizkeilschweißgerät 1 weist nahe dem Heizkeil 2 eine Andrückvorrichtung für die zu verschweißenden Kunststoffbahnen an den Heizkeil 2 auf, die zwei Andrückeinheiten 13, 14 für einen plastifizierten Schweißabschnitt des Überlappungsbereiches der nicht dargestellten Kunststoffbahnen umfasst. Die Figur 2 zeigt den Bereich des Heizkeilschweißgerätes 1 um den Heizkeil 2 ohne die den Heizkeil 2 in der Figur 1 teilweise verdeckende Heizkeilabdeckung 7 in vergrößerter Darstellung.

Wie der Figur 2 zu entnehmen ist, drückt die untere Andrückeinheit 13 die nicht dargestellte untere Kunststoffbahn gegen eine untere Heizkeilflachseite 15 und die obere Andrückeinheit 14 die überlappende nicht dargestellte Kunststoffbahn gegen eine obere Heizkeilflachseite 16 des Heizkeils 2. Der Heizkeil 2 weist zudem zwei Heizkeilseitenflanken 17 auf, die sich von der Heizkeilvorderkante 5 bis zur Heizkeilhinterflanke 6 erstrecken und die obere Heizkeilflachseite 16 mit der unteren Heizkeilflachseite 15 seitlich des Heizkeils 2 verbinden. Die Heizkeilflachseiten 15, 16 erstrecken sich zueinander geneigt und orthogonal zu den zwei Heizkeilseitenflanken 17, die in der horizontalen Raumrichtung angeordnet sind. Der Heizkeil 2 ist mittels einer Lagerung 18 an dem Fahrgestell 4 befestigt. Die Lagerung 18 ist im Wesentlichen zentral in Längsrichtung des Heizkeils 2 angeordnet.

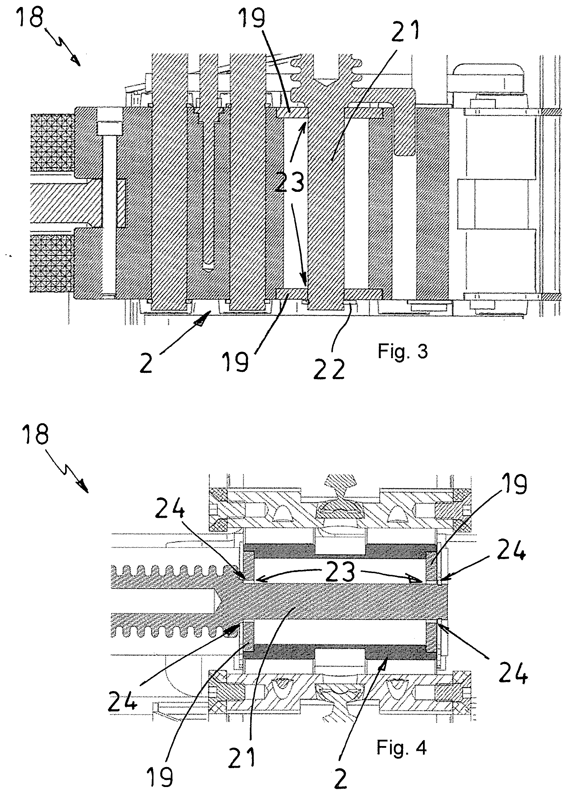

Der Heizkeil 2 weist zwei in den Figuren 3, 4 gezeigte mit Abstand zueinander fluchtend angeordnete Lagerbuchsen 19 und eine den Lagerbuchsen 19 zugeordnete Lagerwelle 21 auf, die von einer mit dem Fahrgestell 4 verbundenen Heizkeilaufhängung 20 ausgeht. Die Lagerwelle 21 und die Lagerbuchsen 19 bilden die Lagerung 18 für den Heizkeil 2. Der Heizkeil 2 ist auf der Lagerwelle 21 schwenkbar gelagert und kann eine definierte Rotation um seine Querachse ausführen. Der Heizkeil 2 kann zudem bezüglich seiner Längsachse eine definierte Verkippung und eine vertikale Verschiebung bezüglich der Mittelebene zwischen den beiden Andrückrollen ausführen. Damit hat der Heizkeil 2 in Längsrichtung und in Querrichtung der Lagerbuchse 19 bzw. der Lagerwelle 21 gegenüber der Lagerwelle 21 definierte Freiheitsgrade. Durch den Freiheitsgrad der Lagerbuchse 19 in Längsrichtung der Lagerwelle 21 und durch den Freiheitsgrad der Lagerbuchse 19 zur Lagerwelle 21 in Querrichtung der Lagerwelle 21 ist der Heizkeil 2 axial und radial verschiebbar sowie radial verkippbar auf der Lagerwelle 21 gelagert.

Die Figur 3 zeigt die Lagerung 18 des Heizkeils 2 nochmals vergrößert in einer Längsschnittdarstellung. Der Heizkeil 2 ist auf einer zylindrisch ausgebildeten Lagerwelle 21 aufgefädelt und mit einem Sprengring 22 vor dem Lösen von der Lagerwelle 21 gesichert. Dazu weisen die zwei einander gegenüberliegenden Heizkeilseitenflanken 17 jeweils als Lagerbuchse 19 eine langlochähnliche Ausnehmung 23 auf. Die langlochähnliche Ausnehmung 23 ist derart an dem Heizkeil 2 ausgerichtet, dass deren Haupterstreckungsrichtung in Richtung der oberen und der untern Heizkeilflachseiten 15, 16 verläuft. In der Querrichtung dazu weist die Ausnehmung 23, wie die Figur 3 zeigt, ein dem Durchmesser der zylindrischen Lagerwelle 21 angepasstes Maß auf. Damit wird der radiale Freiheitsgrad der Lagerbuchse 19 zur Lagerwelle 21 auf die vertikale Richtung bezüglich der Mittelebene zwischen den beiden Andrückrollen beschränkt.

Entsprechend der Figur 4, die die Lagerung 18 des Heizkeils 2 in einer Querschnittsdarstellung zeigt, ist die langlochähnliche Ausnehmung 23 in Richtung der beiden Heizkeilflachseiten 15, 16 größer ausgebildet als der Durchmesser der zylindrischen Lagerwelle 21. Zwischen der Lagerwelle 21 und der Lagerbuchse 19, die von den beiden Ausnehmungen 23 in den beiden Heizteilseitenflanken 17 gebildet ist, ist jeweils ein Freiraum 24 vorhanden, der eine Verkippung des horizontal angeordneten Heizkeils 2 in vertikaler Richtung entsprechend dem Maß des Freiraum 24 ermöglicht. Dadurch kann sich der Heizkeil 2 in Längsrichtung und in Querrichtung der von der unteren Andrückrolle 8 und der oberen Andrückrolle 9 bestimmten Lage des Schweißabschnittes des Überlappungsbereiches der Kunststoffbahnen anpassen. Dadurch ist gewährleistet, dass der Heizkeil 2 immer die gleiche optimale Lage gegenüber der obere und die untere Andrückrolle 8, 9 aufweist.

## Patentansprüche

1. Heizkeilschweißgerät (1) zum überlappenden Verschweißen von Kunststoffbahnen, mit einem Heizkeil (2), der zwei an einer Heizkeilhinterflanke (6) beginnende und an einer Heizkeilvorderkante (5) aufeinanderstoßende Heizkeilflachseiten (15, 16) aufweist und an einem von Fahrrollen (3) getragenen Fahrgestell (4) mit der Heizkeilvorderkante (5) entgegen der Bewegungsrichtung beim Schweißen ausgerichtet befestigt ist, wobei der Heizkeil (2) in einem Schweißabschnitt eines Überlappungsbereiches zwischen den Kunststoffbahnen relativ zu diesen bewegbar ist, um den Schweißabschnitt zu plastifizieren, mit einer Andrückvorrichtung für die Kunststoffbahnen an den Heizkeil (2), die zwei Andrückeinheiten (13, 14) umfasst, von denen je eine einer der Heizkeilflachseiten (15, 16) zugeordnet ist, und mit zwei einander gegenüberliegenden Andrückrollen (8, 9), zwischen denen ein plastifizierter Schweißabschnitt beim Schweißen hindurchläuft, **dadurch gekennzeichnet, dass** der Heizkeil (2) mittels mindestens einer Lagerbuchse (19), die sich zwischen den beiden Heizkeilflachseiten (15, 16) parallel zu der Heizkeilvorderkante (5) und der Heizkeilhinterflanke (6) jeweils mit Abstand erstreckt, auf einer Lagerwelle (21) schwenkbar und damit um die Querachse des Heizkeils (2) neigbar gelagert ist.

2. Heizkeilschweißgerät nach Anspruch 1, **dadurch gekennzeichnet, dass** die Lagerbuchse (19) gegenüber der Lagerwelle (21) definierte axiale und/oder radiale Freiheitsgrade aufweist, so dass der Heizkeil (2) um seine Längsachse verkippbar und/oder vertikal in Richtung der Andrückeinheiten (13. 14) verschiebbar ist.

3. Heizkeilschweißgerät nach Anspruch 2, **dadurch gekennzeichnet, dass** der Heizkeil (2) in Längsrichtung der Lagerwelle (21) axial auf der Lagerwelle (21) verschiebbar ist.

4. Heizkeilschweißgerät nach einem der vorstehenden Ansprüche, **dadurch gekennzeichnet, dass** die Lagerbuchse (19) eine langlochähnliche Querschnittsform und die Lagerwelle (21) eine runde Querschnittsform aufweisen, so dass oberhalb und unterhalb der Lagerwelle (21) zwischen der Lagerbuchse (19) und der Lagerwelle (21) ein Freiraum (24) ausgebildet ist.

## Claims

1. Hot-wedge welding device (1) for overlap welding plastic webs, comprising a hot wedge (2) that has two hot-wedge flat sides (15, 16), which start at a hot-wedge rear face (6) and adjoin one another at a hot-wedge front edge (5), and is attached to a chassis (4) borne by drive rollers (3) with the hot-wedge front edge (5) oriented counter to the direction of movement during welding, wherein the hot wedge (2) can be moved relative to the plastic webs in a welding section of an overlap region between these webs so as to plasticize the welding section, further comprising a pressure device for pressing the plastic webs against the hot wedge (2), which comprises two pressure units (13, 14), each of which being associated with one of the hot-wedge flat sides (15, 16), and further comprising two mutually opposing pressure rollers (8, 9), between which a plasticized welding section passes during welding, **characterized in that** the hot wedge (2) is mounted by way of at least one bearing bushing (19), which extends between the two hot-wedge flat sides (15, 16) parallel to the hot-wedge front edge (5) and the hot-wedge rear face (6) at a distance therefrom, so as to be pivotable on a bearing shaft (21) and thereby inclinable about the transverse axis of the hot wedge (2).

2. Hot-wedge welding device according to claim 1, **characterized in that** the bearing bushing (19) has defined axial and/or radial degrees of freedom with respect to the bearing shaft (21) so that the hot wedge (2) can be tilted about the longitudinal axis thereof and/or displaced vertically in the direction of the pressure units (13, 14).

3. Hot-wedge welding device according to claim 2, **characterized in that** the hot wedge (2) can be displaced axially on the bearing shaft (21) in the longitudinal direction of the bearing shaft (21).

4. Hot-wedge welding device according to any one of the preceding claims, **characterized in that** the bearing bushing (19) has the cross-sectional shape of an elongated hole, and the bearing shaft (21) has a round cross-sectional shape, so that clearances (24) are formed above and beneath the bearing shaft (21) between the bearing bushing (19) and the bearing shaft (21).

## Revendications

1. Appareil de soudage (1) à coin chauffant, dévolu au soudage par chevauchement de feuilles de matière plastique et comprenant un coin de soudage (2) qui est muni de deux côtés aplatis (15, 16) débutant sur un flanc postérieur (6) du coin et se rejoignant mutuellement sur un flanc antérieur (5) dudit coin, et est fixé à un châssis de roulement (4) porté par des rouleaux de roulement (3), avec orientation dudit flanc antérieur (5) dans le sens opposé à la direction du mouvement au cours du soudage, sachant que ledit coin de soudage (2) peut être mû par rapport auxdites feuilles de matière plastique sur un tronçon de soudage d'une zone de chevauchement située entre ces dernières, en vue de plastifier ledit tronçon de soudage ; un dispositif conçu pour presser lesdites feuilles de matière plastique contre ledit coin de soudage (2), et doté de deux unités de pressage (13, 14) dont chacune est affectée à l'un respectif desdits côtés aplatis (15, 16) dudit coin de soudage ; et deux rouleaux presseurs (8, 9) placés en regard l'un de l'autre, entre lesquels un tronçon de soudage plastifié défile au cours du soudage, **caractérisé par le fait que** le coin de soudage (2) est monté à pivotement sur un arbre de palier (21), et donc avec faculté d'inclinaison autour de l'axe transversal dudit coin de soudage (2), à l'aide d'au moins un coussinet de palier (19) s'étendant entre les deux côtés aplatis (15, 16) dudit coin de soudage, avec espacement respectif, parallèlement au flanc antérieur (5) et au flanc postérieur (6) dudit coin.

2. Appareil de soudage à coin chauffant, selon la revendication 1, **caractérisé par le fait que** le coussinet de palier (19) présente des degrés de liberté axiaux et/ou radiaux bien définis, par rapport à l'arbre de palier (21), de sorte que le coin de soudage (2) peut basculer autour de son axe longitudinal et/ou peut coulisser verticalement dans la direction des unités de pressage (13, 14).

3. Appareil de soudage à coin chauffant, selon la revendication 2, **caractérisé par le fait que** le coin de soudage (2) peut coulisser axialement sur l'arbre de palier (21) dans la direction longitudinale dudit arbre de palier (21).

4. Appareil de soudage à coin chauffant, selon l'une des revendications précédentes, **caractérisé par le fait que** le coussinet de palier (19) présente une configuration de section transversale du type trou oblong, et l'arbre de palier (21) présente une configuration de section transversale ronde, un espace libre (24) étant ainsi réservé au-dessus et au-dessous de l'arbre de palier (21), entre ledit coussinet de palier (19) et ledit arbre de palier (21).
